# EUROPEAN PATENT APPLICATION

(11) **EP 2 157 541 A1**
(43) Date of publication of application: **24.02.2010**
(21) Application number: 09010787.1
(22) Date of filing: 21.08.2009
(51) Int. Cl.: G06Q 30/00

(54) **System and method for scale-based price and inventory management of perishable goods**

(30) Priority: 21.08.2008 US 195948
(71) Applicant: Mettler-Toledo, Inc., Columbus OH 43240-2020 (US)
(72) Inventor: Hipsher, Brian, Worthington OH Ohio 43085 (US)
(74) Representative: Schilling, Doris

(57) **Abstract**

A system and method for controlling the inventory of perishable goods comprises an advanced weighing scale serving as a portal to the output of a perishable goods inventory management software application and a perishable goods price optimization software application that receive and analyze inventory and sales data relating to perishable goods of interest. Inventory suggestions and/or price changes recommended by the software applications with respect to a particular perishable good of interest are viewable directly at a corresponding advanced weighing scale. Operation of the perishable goods inventory management software application and perishable goods price optimization software application may be controlled by the advanced weighing scale. An electronic pricing device may be included for displaying the price of a perishable good of interest. In at least certain embodiments, the electronic display may be changed in response to a signal(s) from an advanced weighing scale based on a recommendation of the perishable goods price optimization software application.

## Description

### BACKGROUND

The present invention is directed to a system and method of optimizing the selling price and controlling inventory level of perishable products. More particularly, the present invention is directed to a system and method of optimizing the selling price and controlling the inventory level of perishable goods by using one or more advanced weighing scales located at or near the location of such perishable goods.

Perishable goods typically have a limited shelf life. Familiar and non-limiting examples of such perishable goods may include items like meats, deli items, and fresh fruits and vegetables that are commonly found in a grocery. While the shelf life of such perishable goods can generally be extended by storage in refrigerated and/or other controlled environments, the shelf life is usually nonetheless finite and such goods must normally be sold by some established expiration date.

As should be easily understood, the required disposal of unsold perishable goods may represent a significant expense to a retailer. Consequently, various techniques have been employed to maximize the sale of perishable goods on hand and to regulate the inventory of given perishable goods to an amount that is commensurate with consumer demand within the shelf life of the goods. For example, certain software applications have been developed to separately deal with these issues.

It is known that software applications exist to assist retailers with planning and managing their inventory of perishable goods. Such applications commonly operate by gathering relevant information from point of sale (POS) terminals, weighing scales and handheld devices, and subsequently using said information to generate inventory-related reports that are delivered to computers at central locations (e.g., headquarters or individual store offices). Ideally, the reports are then used by corporate or individual store personnel to manage their inventory of perishable goods in a manner that minimizes waste.

In a related manner, separate software applications have been developed to help retailers determine the optimum price for a given perishable good. Such software may analyze sales of a perishable good of interest in conjunction with its expiration date, and recommends a price that will promote the sale of the entire inventory of said perishable good within its shelf life. The software may call for one or more price reductions within this time period in order to sell more product and thereby eliminate or minimize excess inventory (waste). Conversely, the software may also call for one or more price increases within this time period in order to prevent an inventory shortage. For example, a price increase may be called for if the inventory of a given good becomes short with ample shelf life still remaining.

While software applications to perform these described functions are known to exist, its use is problematic for several reasons. For example, the reports and other information generated by such applications are typically delivered to a central location away from the actual departments or other areas of a retail establishment where the perishable goods of interest actually reside. As such, the successful use of such information relies on the appropriate dissemination thereof by receiving personnel. For example, even on an individual store level, it is necessary that the person(s) receiving information from inventory management software applications transmit that information to the appropriate personnel in the affected areas. Generally, this means that in a best case situation, personnel responsible for perishable goods inventory are provided with some sort of paper report. However, responsible personnel generally cannot access the information provided by known software applications from a convenient location, nor can they manipulate the information or otherwise view the information in another form that may be more effective.

Further, while price optimization software applications may suggest price adjustments as described above, the successful implementation of such price adjustment techniques again relies on store personnel. For example, current methods require store personnel to follow the suggested price adjustment advice and to indicate such price adjustments to consumers by revising/creating appropriate signage, etc.

Additionally, inventory control (i.e., waste reduction) through the use of such price adjustments is time sensitive. That is, the success of such a technique depends largely on store personnel making a suggested price adjustment at the appropriate time. Otherwise, actual inventory level may not correspond to the target price point calculated by the associated software.

Therefore, as can be understood from the foregoing observations, there exists a need for a system and method that provides such inventory analysis and price adjustment advice directly to those areas of a retailer where perishable goods of interest are located. There also exists a need for a system and method that reduces reliance on store personnel to timely implement the actions dictated by the related inventory management and/or price optimization software applications. A system and method of the present invention satisfy these needs.

### SUMMARY OF THE OF THE GENERAL INVENTIVE CONCEPT

A system and method of the present invention takes advantage of perishable goods inventory management and price optimization software applications, so as to reduce or eliminate the waste of perishable goods and maximize retailer profits. However, unlike known systems and methods, the present invention delivers the output of such software applications directly to one or more advanced weighing scales located in the area of perishable goods of interest.

In addition to typical weighing scale components, advanced weighing scales typically also include a microprocessor, an operating system (scale software application), memory, one or more displays, and an input means. Such scales may also include wired or wireless networking ability and/or a label printer. The display screen(s) of such a scale may be a touch screen.

According to the present invention, the output of software applications as described above is sent to an advanced weighing scale, preferably an advanced weighing scale located in the area of a perishable good(s) of interest. Typically, such information would be sent to a counter service scale, but such information could also be sent to a self-service scale equipped with appropriate security measures to prohibit access thereto by a customer. Sending the information to a weighing scale in the area of a perishable good(s) of interest allows store personnel directly responsible for the inventory management and/or pricing of such perishable goods to have convenient and substantially immediate access to the valuable information provided by such software applications. Further, because personnel in perishable goods departments typically interact repeatedly with weighing scales throughout a given day, an advanced weighing scale serves as a logical and efficient (although currently unexploited) platform for receiving and accessing the information produced by such software applications.

In addition to the use of advanced weighing scales as a portal for accessing and using perishable goods inventory management and price optimization information, at least certain embodiments of the present invention may also utilize electronic pricing devices, such as electronic shelf labels (ESLs). Such electronic pricing devices may be associated with perishable goods of interest, and placed in direct or indirect wired or wireless communication with one or more advanced weighing scales receiving at least perishable goods price optimization information. Adjustments to the pricing of perishable goods of interest may then be adjusted as frequently as necessary, with the price changes reflected on an associated electronic pricing device(s). Signaling an electronic pricing device(s) to reflect a price change may be accomplished automatically by an advanced weighing scale, or may occur only after some intervention by a user (e.g., store employee).

Consequently, the present invention is a combination inventory management/price optimization system and its method of use. Optionally, but preferably, the system and method also includes an electronic price display system. Thus, a system and method of the present invention may use an advanced weighing scale to control inventory and to determine and set optimum pricing levels. All the applications necessary to perform these functions may be controlled by the scale software application. Use of an advanced weighing scale in this manner allows for perishable goods information to be displayed in the most appropriate location for store personnel to timely render resulting inventory control decisions and/or to effectuate pricing changes that maximize retailer profits.

According to the present invention the system comprises a perishable goods inventory management software application in communication with the advanced weighing scale and preferably with the point of sale device, wherein said perishable goods inventory management software application is adapted to analyze inventory information relating to a perishable good of interest. In addition the system comprises a perishable goods price optimization software application in communication with said advanced weighing scale and preferably with the point of sale device, wherein said perishable goods price optimization software application is adapted to analyze the sales of perishable good of interest in relation to an amount of inventory thereof and to recommend a price at which said amount of inventory is likely to sell before the shelf life of said perishable good is exhausted. Preferably the output of said perishable goods inventory management software application and said perishable goods price optimization software application is received and viewable at said advanced weighing scale.

In an exemplary embodiment the perishable goods inventory management software application and the perishable goods price optimization software application are adapted to send their output as to all analyzed perishable goods to each advanced weighing scale in communication therewith. The advanced weighing scales are adapted to sort said output data such that the only data presented by a given advanced weighing scale is relevant to a perishable good(s) with which said advanced weighing scale is associated.

Alternatively said perishable goods inventory management software application and said perishable goods price optimization software application are adapted to sort their output such that the only data sent to a given advanced weighing scale is relevant to a perishable good(s) with which said advanced weighing scale is associated.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:
FIG. 1 is a schematic representation of one exemplary embodiment of the present invention; and
FIG. 2 is a flowchart illustrating an exemplary method of practicing the present invention.

### DETAILED DESCRIPTION OF THE EXEMPLARY EMBODIMENT(S)

As discussed above, the present invention is directed to a combination perishable goods inventory management system and method, price optimization system and method and, optionally, electronic price display system and method. All or some of said systems may be integrated into the scale software application of an advanced weighing scale. Thus, a system and method of the present invention may use an advanced weighing scale (which may also be referred to herein as "weighing scale" or "scale") to monitor inventory levels, suggest order quantities, and alert operators to out-of-stock situations, as well as to determine optimum pricing levels and to automatically or semi-automatically display said optimum pricing on electronic pricing devices associated with perishable goods of interest. All the applications necessary to perform these functions may run simultaneously and may be controlled by the scale software application. Use of an advanced weighing scale in this manner allows for perishable goods information to be displayed in the most appropriate location for store personnel to timely render resulting inventory control decisions and/or to effectuate pricing changes that maximize retailer profits.

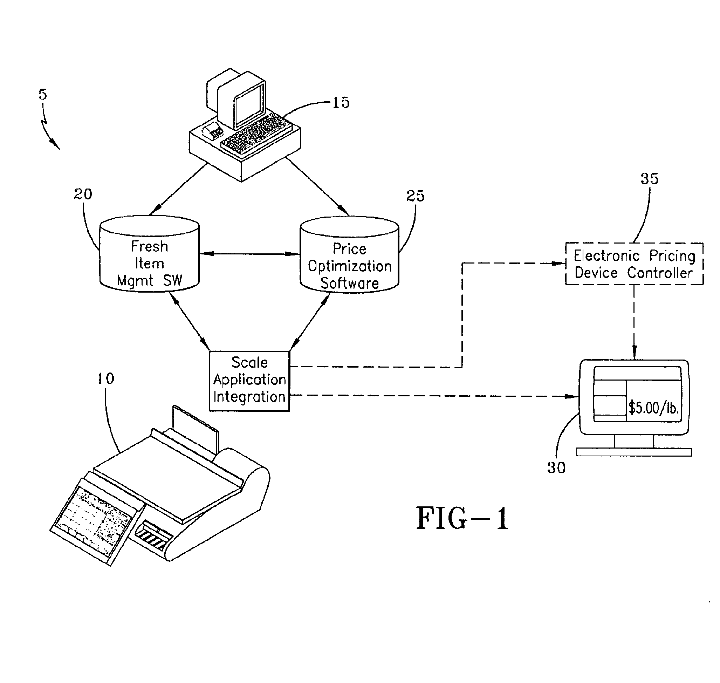

One exemplary embodiment of a system of the present invention is schematically illustrated in FIG. 1. As shown, this particular system **5** includes a weighing scale **10,** a point of sale (POS) device **15** (e.g., register), an inventory management software application **20** and a price optimization software application **25.** As shown, each of the weighing scale **10** and POS device **15** communicate with the inventory management software application **20** and a price optimization software application **25.** The inventory management software application **20** and price optimization software application **25** are also shown to communicate with each other in this embodiment. Such communications may occur directly, or indirectly through an intermediary channel (such as an advanced weighing scale).

While the exemplary system of FIG. 1 depicts only one POS device **15** and one weighing scale **10,** a system of the present invention may include multiple POS devices and/or weighing scales. Consequently, the inventory management software application 20 and price optimization software application **25** may communicate with multiple POS devices and/or weighing scales. Additionally, it is possible for embodiments of the present invention to function without a POS device, and/or with only one or the other of the inventory management software application or price optimization software application.

The POS device **15** of the system **5** of FIG. 1 may be any POS device known in the art, and may be located in various areas of a retail or other establishment. Typically, such POS devices are found in retail checkout areas, but may also be sited in pharmacies and other locations within a retail establishment. In addition to performing its customary tasks, the POS device **15** functions to collect sales information regarding perishable goods of interest. As illustrated in FIG. 1, this sales information, or data relating to the sales information is shared with the inventory management software application **20** and price optimization software application **25.**

The weighing scale **10** is preferably an advanced weighing scale. As shown, advanced weighing scales typically include a body portion, and a weigh pan/platter that rests upon one or more subjacent load cells (not visible). Advanced weighing scales typically also include a microprocessor, an operating system (scale software application), memory, one or more displays, and an input means. The scale software application (or scale application) governs scale operation and remains in control of associated components to ensure that applicable legal for commerce restrictions are not violated. Such advanced weighing scales may also include wired or wireless networking ability and/or a label printer. The display screen(s) of such an advanced weighing scale may be a touch screen.

As shown in FIG. 1, advanced weighing scales may be designed for use by a store employee, such as in a deli department thereof. Such a scale may be generically referred to herein as a "counter service scale". Other advanced weighing scales may be designed for use by a customer, such as in a fresh fruit/vegetable department of a retailer. Such a scale may be generically referred to herein as a "self-service scale". It is to be understood, however, that the "counter service scale" and "self-service scale" references are used herein only as generic descriptors and not as an indication of any requisite scale design, construction, operation and or location of use.

The various detailed constructions and features of such advanced weighing scales would be quite familiar to one skilled in the art and, consequently, no further description is required herein. One skilled in the art would also understand that the advanced weighing scale **10** of FIG. 1 is merely an exemplary embodiment of such a scale, and various other designs may exist and be used in conjunction with the present invention.

As would no doubt be familiar to most consumers, a weighing scale **10** may be located within various departments of a retailer. While shopping, a consumer selects one or more products that must be weighed on a scale - which is usually located in or near the department where the selected product(s) is located. As described above, such a scale may be a counter scale or a self-service scale.

Thus, according to the present invention, a selected product is placed on an advanced weighing scale to obtain the weight of the product. Once located on the weighing scale, the product is identified. Identification may be accomplished by a number of techniques including, for example, scanning a bar code, entering a PLU code, visual recognition, etc. Product identification may also be accomplished via other various techniques known in the art.

In addition to performing its typical functions (e.g., weighing a product, printing a label, etc.), the advanced weighing scale **10** collects information relating to one or more perishable goods of interest. This information is shared with the inventory management software application **20** and price optimization software application **25,** as represented in FIG. 1.

As briefly described above, and as would be understood by one skilled in the art, the inventory management software application **20** and price optimization software application **25** use the data received from the POS device(s) **15** and weighing scale(s) **10** at a given location to assist the retailer with planning and managing its inventory of perishable goods and to determine and recommend the optimum price for a given perishable good. Based on the capabilities of advanced weighing scales, and depending on the practices in place at a given retailer, it may be possible to collect all necessary information relative to a perishable good of interest solely at the advanced weighing scale **10.** In such a case, it may be possible to practice the present invention without the need for a POS device.

Unlike known methods employing such software applications, the output of the inventory management and price optimization software applications **20, 25** is sent to the advanced weighing scale(s) **10** according to the present invention. This may occur in a number of ways. For example, the inventory management software application 20 and price optimization software application **25** may each be operative to sort its output such that a given weighing scale(s) **10** only receives information relevant to perishable goods with which it is likely to be associated. Alternatively, the inventory management software application **20** and price optimization software application **25** may send to each weighing scale **10** output relevant to all analyzed perishable goods. In this case, scale application or another software application running on the weighing scale(s) may function to select relevant information from the totality of information received from the inventory management and price optimization software applications **20, 25.**

In any event, output from the inventory management and price optimization software applications **20, 25** related to a given perishable good of interest is accessible (e.g., viewable) on an associated weighing scale(s) **10.** That is, output from the inventory management and price optimization software applications **20, 25** is preferably provided to a weighing scale(s) **10** in the area of a perishable good(s) of interest. This allows store personnel directly responsible for the inventory management and/or pricing of such perishable goods to have convenient and substantially immediate access to the information provided by the software applications.

The scale applications that govern operation of typical advanced weighing scales normally remain in control of various scale components to ensure that applicable legal for commerce restrictions are not violated. As such, an inventory management software application and/or price optimization software application associated with the present invention may be safely integrated into the scale application. That is, the inventory management and/or price optimization software applications may constitute a portion of the scale application. For example, the entire inventory management and/or price optimization software application, or only a portion thereof, may reside on a weighing scale. In such a case, a weighing scale having the inventory management and/or price optimization software application residing thereon may act as a master scale in a multiple scale location. In this capacity, the master scale may receive data from and transmit data (e.g., inventory management and/or price optimization software application data) to other weighing scales at the location.

In alternative embodiments of the present invention, an inventory management and/or price optimization software application may be a secondary application that interacts with the scale application. In this case, the scale application may control the inventory management and/or price optimization software application in various ways, such as when the secondary application(s) may run, where on the scale display the output from the secondary application(s) may appear, etc. Obviously, the specific interaction of a secondary application with the scale application may vary. One particular methodology for facilitating the interaction of a secondary software application (such as a recipe application) with a scale application is described in detail in U.S. Application Serial No. 11/947,602, which was filed on November 29, 2007, and is hereby incorporated by reference herein.

When the inventory management and/or price optimization software application is a secondary application, the entirety thereof, or only a portion thereof, may once again reside on the scale. For example in one exemplary embodiment, both the secondary applications and any associated database(s) may reside on the scale. In another exemplary embodiment, the secondary applications may reside on the scale while associated databases reside remotely therefrom. In still another exemplary embodiment, the secondary applications may reside remotely from the scale, with associated database(s) residing on, or remotely from, the scale. When secondary inventory management and/or price optimization software applications are used, the scale application of a given advanced weighing scale may remotely control the operation and data transfer functions thereof. Alternatively, the scale application of a given advanced weighing scale may simply regulate how and/or when information from a secondary inventory management and/or price optimization software application is received.

In addition to the use of an advanced weighing scale as a portal for accessing and implementing perishable goods inventory management and price optimization information/recommendations, at least certain embodiments of the present invention may also utilize electronic pricing devices, such as electronic shelf labels (ESLs) or other similar currently known or yet to be developed devices.

As indicated in FIG. 1, the advanced weighing scale(s) **10** may be in direct communication with one or more electronic pricing devices **30,** or may communicate with such electronic pricing devices indirectly through an electronic pricing device controller **35** of some design. Communications between an advanced weighing scale and an electronic pricing device or associated controller may be of a wired or wireless nature.

An electronic pricing device **30** may be associated with a perishable good of interest and may receive at least perishable goods price optimization information from the advanced weighing scale **10.** Adjustments to the pricing of perishable goods of interest may then be performed as frequently as necessary, with the price changes reflected on the associated electronic pricing device(s). Signaling an electronic pricing device(s) to reflect a price change may be accomplished automatically by an advanced weighing scale, or may occur only after some intervention by a user (e.g., store employee). Alternatively, it may be possible for the price optimization software application to cause a price change on an electronic pricing device, such as by informing the advanced weighing scale **10** of the price change and also sending the price change information to a centrally located price file that subsequently transmits the price change information to the electronic pricing device or an associated controller thereof.

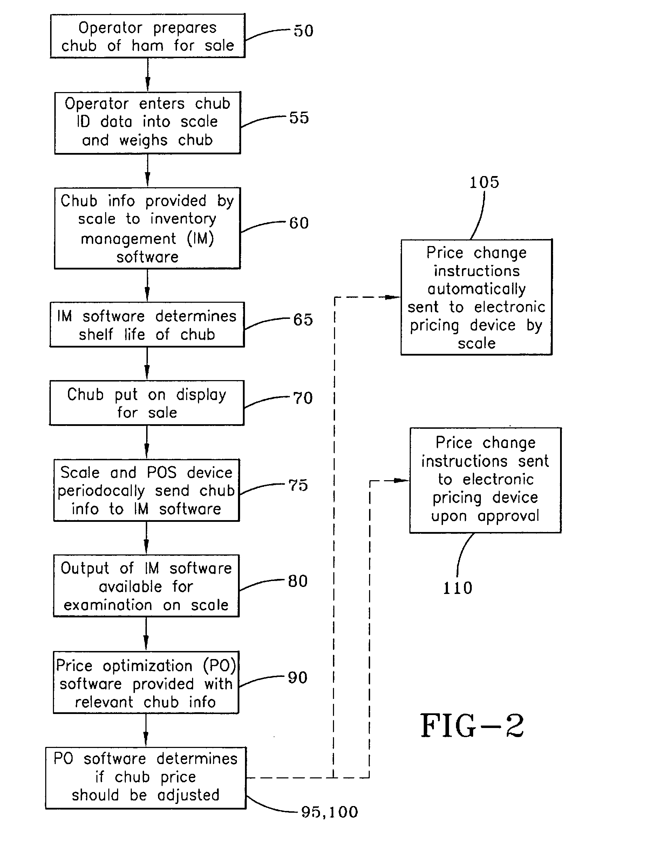

One example of employing a system of the present invention to manage/control inventory and optimize pricing is described below and illustrated by the flow chart of FIG. 2. As described above, the system by which the illustrative method is practiced employs an advanced weighing scale. The system also employs one or more electronic pricing devices. It is to be understood that the particular product described in FIG. 2 is provided for purposes of illustration only, and the system and method of the present invention is obviously applicable to a wide variety of other products.

In the exemplary method represented in FIG. 2, a scale operator or other store employee prepares a chub of ham for sale in the deli/meat department of a retailer **50.** To that end, the operator enters a product look up (PLU) number and/or some other identifying information into an advanced weighing scale and weighs the chub on the scale **55.** This information is provided by the scale to an appropriate perishable goods inventory management software application **60,** which uses the information to determine the shelf life of the chub **65.** The chub is then put on display for sale **70.**

Each day (or at some other frequency), the advanced weighing scale(s) on which the chub is weighed and, preferably, each POS device via which a portion of said chub is purchased by a consumer, sends relevant information about the chub to the inventory management software application **75.** This information (e.g., sales and inventory information) is available for examination on the advanced weighing scale(s) **80.** Thus, a department manager and/or other individuals are able to view information (e.g., reports) provided by the inventory management software application with respect to a perishable good(s) for which he/they have responsibility. In this particular example, the individual(s) would be able to easily review the sales progress of the ham chub on display.

A price optimization software application is also employed to determine the best price at which to sell the currently remaining amount of ham on the chub, within its shelf life and without causing a shortage. The price optimization software application is provided with sales and inventory information relative to the ham chub **90,** whether directly by the inventory management software application, or through the advanced weighing scale(s). As would be understood by one skilled in the art, the price optimization software application employs various algorithms to determine if a price adjustment should be made to optimize sales of ham from the chub **95.**

The algorithms and operation of such an application may vary but, essentially, the goal of the application is to determine the highest possible price at which a given perishable good can be sold while minimizing the possibility of waste due to an amount of the perishable good not selling prior to its expiration date. Preferably, the price optimization software application takes into account all other related items that are also offered for sale. For example, in the case of the ham chub, the price optimization software application also preferably considers, for example, that increasing ham sales by optimizing the sales price may cause a decrease in the sales of roast beef. In the particular example of FIG. 2, the price optimization software application determines, after all factors are considered, that the price of the ham remaining on the chub should be discounted to avoid waste by expiration **100.**

Once this determination has been made, a price adjustment can either be accomplished automatically or only with user intervention and/or approval. For example, the advanced weighing scale of the system can automatically cause the displayed price of the ham to be changed to the price recommended by the price optimization software application by sending appropriate information or instructions to an associated electronic pricing device **105.** Alternatively, the newly suggested price of the ham may not be displayed by such an electronic pricing device until the new price is approved by a responsible party **110.** In either case, a wired or wireless signal may eventually be sent by the advanced weighing scale to the appropriate electronic pricing device(s) so as to display the price change. In systems lacking electronic pricing devices, such price changes could, of course, be accomplished manually by altering the appropriate signage.

Because data regarding the sales and remaining inventory of the ham chub is preferably provided to the price optimization software application on a frequent basis, it is also possible that a price increase may be recommended. For example, if the initial sales price associated with the ham chub produces a sales volume computed to result in a shortage of ham prior to its expiration date, a price increase may be recommended. Such a recommendation may also occur, for example, if a previously recommended price decrease has resulted in a brisker than calculated sales volume.

Preferably, the inventory management software application receives updated pricing information on a perishable good of interest. In this case, the inventory management software application receives price change information relating to the ham chub and uses said information to track sales volume at the various pricing levels in order to optimize the amount of ham chubs ordered in the future. For example, if pricing discounts were required in order to sell all of the ham chub by its expiration date, the inventory management software application may recommend that a lesser amount of ham chub(s) be subsequently ordered.

It can be understood from the foregoing general discussion and description of the exemplary embodiment that variations of the present invention are possible. Therefore, while certain embodiments of the present invention may be described in detail above, the scope of the invention is not to be considered limited by such disclosure, and modifications are possible without departing from the spirit of the invention as evidenced by the following claims:

## Claims

1. A perishable goods inventory management system, comprising:
at least one advanced weighing scale for collecting information about perishable goods of interest;
a perishable goods inventory management software application in communication with said at least one advanced weighing scale; and
a perishable goods price optimization software application in communication with said at least one advanced weighing scale,
wherein said perishable goods inventory management software application and said perishable goods price optimization software application deliver output data to said at least one advanced weighing scale for controlling the inventory of at least one perishable good of interest in a manner that maximizes profits stemming from the sale of said at least one perishable good of interest.

2. The system according to claim 1, wherein said at least one advanced weighing scale is adapted to provide said perishable goods inventory management software application and said perishable goods price optimization software application with information regarding the current inventory of a perishable good of interest.

3. The system according to claim 1 or 2, comprising at least one point of sale device for collecting information about perishable goods of interest, wherein said perishable goods inventory management software application and said perishable goods price optimization software application are in communication with said point of sale device; and wherein said at least one point of sale device is adapted to provide said perishable goods inventory management software application and said perishable goods price optimization software application with information regarding the sales volume of a perishable good of interest.

4. The system according to claim 1, 2 or 3, wherein said perishable goods inventory management software application and said perishable goods price optimization software application are controlled by a scale application of said at least one advanced weighing scale.

5. The system according to any of claims 1 to 4, wherein said perishable goods inventory management software application and said perishable goods price optimization software application are integrated into a scale application of said at least one advanced weighing scale.

6. The system according to any of claims 1 to 5, wherein said perishable goods price optimization software application is adapted to use information from said perishable goods inventory management software application to determine an optimal price that will result in the sale of substantially all of a perishable good of interest prior to its expiration date.

7. The system according to any of claims 1 to 6, further comprising at least one electronic pricing device for displaying the price of a perishable good of interest,
wherein said at least one electronic pricing device is in communication with said at least one advanced weighing scale by wired or wireless communication.

8. The system according to claim 7, wherein communication between said at least one electronic pricing device and said at least one advanced weighing scale occurs through an electronic pricing device controller.

9. The system according to claim 7 or 8, wherein a price displayed on said at least one electronic pricing device is automatically changeable in response to a signal from said at least one advanced weighing scale.

10. The system according to any of claims 1 to 9, wherein said perishable goods inventory management software application and said perishable goods price optimization software application are secondary applications working with a scale application of said advanced weighing scale.

11. The system according to any of claims 1 to 10, wherein said advanced weighing scale is in communication with other advanced weighing scales, said advanced weighing scale acting as a master scale to receive data from said perishable goods inventory management software application and said perishable goods price optimization software application and to distribute portions of said information to appropriate ones of said other advanced weighing scales that are associated with perishable goods to which said portions of said data correspond.

12. A method for controlling the inventory of perishable goods, comprising a perishable goods inventory management system according to any of claims 1 to 11, wherein:
a perishable goods inventory management software application is in communication with said advanced weighing scale said perishable goods inventory management software application analyzing inventory information relating to a perishable good of interest;
a perishable goods price optimization software application is in communication with said advanced weighing scale said perishable goods price optimization software application analyzing the sales of perishable good of interest in relation to an amount of inventory thereof and to recommend a price at which said amount of inventory is likely to sell before the shelf life of said perishable good is exhausted;
receiving and viewing the output of said perishable goods inventory management software application and said perishable goods price optimization software application at said advanced weighing scale.

13. The method of claim 12, comprising an electronic pricing device for displaying the price of a perishable good of interest, said electronic pricing display device being in communication with said advanced weighing scale; and using said electronic pricing device to display the price of a perishable good of interest, wherein said electronic pricing device is responsive to signals from said advanced weighing scale.

14. The method according to claim 12 or 13, further comprising controlling said perishable goods inventory management software application and said perishable goods price optimization software application with a scale application of said advanced weighing scale.

15. The method according to any of claims 12 to or 14, wherein said perishable goods price optimization software application receives information from said perishable goods inventory management software application and uses said information to determine said optimal price for a perishable good of interest.

16. The method according to any of claims 12 to 15, comprising at least one point of sale device for collecting information about perishable goods of interest, wherein said perishable goods inventory management software application and said perishable goods price optimization software application are in communication with said point of sale device; and wherein said at least one point of sale device provides said perishable goods inventory management software application and said perishable goods price optimization software application with information regarding the sales volume of a perishable good of interest.

17. The method according to any of claims 12 to 16, wherein the output of said perishable goods inventory management software application and said perishable goods price optimization software application is sent to a central location prior to being sent to one or more advanced weighing scales.
